# EUROPÄISCHE PATENTSCHRIFT

(11) **EP 4 332 420 B1**
(45) Veröffentlichungstag und Bekanntmachung des Hinweises auf die Patenterteilung: **08.10.2025**
(21) Anmeldenummer: 22192682.7
(22) Anmeldetag: 29.08.2022
(51) Int. Cl.: F16L 25/00

(54) **FLUIDLEITUNG MIT EINEM FLUIDFÜHRENDEN WELLROHR**
FLUID LINE WITH A FLUID-CARRYING CORRUGATED PIPE
CONDUITE DE FLUIDE DOTÉE D'UN TUBE ONDULÉ ACHEMINANT LE FLUIDE

(43) Veröffentlichungstag der Anmeldung: 06.03.2024
(73) Patentinhaber: TI Automotive (Fuldabrück) GmbH, 34277 Fuldabrück (DE)
(72) Erfinder: Barthel, Iris, 34270 Schauenburg (DE); Rohde, Reiner, 34323 Malsfeld (DE); Thomke, Thorsten, 34225 Baunatal (DE); Orth, Joachim, 34560 Fritzlar (DE)
(74) Vertreter: Novagraaf Group

(56) Entgegenhaltungen:
- EP-A1- 1 104 865
- EP-A2- 1 333 217
- DE-A1- 10 261 557
- DE-A1- 19 907 412

## Beschreibung

Die Erfindung betrifft eine Fluidleitung umfassend ein Wellrohr und einen Leitungsverbinder, wobei der Leitungsverbinder einen Verbinderkörper aufweist, wobei der Verbinderkörper einen Steckerabschnitt umfasst, wobei das Wellrohr auf den Steckerabschnitt aufgesteckt ist, wobei der Leitungsverbinder eine Befestigungsvorrichtung umfasst, wobei die Befestigungsvorrichtung das Wellrohr an dem Steckerabschnitt befestigt, wobei der Steckerabschnitt eine Mittenachse aufweist und die Mittenachse eine axiale Richtung definiert.

Eine derartige Fluidleitung ist aus WO 01/20216 A1 bekannt und dient der Führung von Wischwasser mit Betriebsdrücken bis zu 3 bar. Die Befestigungsvorrichtung umfasst zwei Arme, die sich in axialer Richtung erstrecken und zueinander diametral gegenüber der Mittenachse und dem Steckerabschnitt angeordnet sind. Die Arme weisen an ihren Innenseiten jeweils drei Vorsprünge auf, welche in die Nuten auf der Außenseite des Wellrohrs eingreifen können. Die Arme sind axial einwärts an den Leitungsverbinder bzw. an einen Flansch des Leitungsverbinders angeformt und weisen axial auswärtige, freie bzw. nicht direkt an den Leitungsverbinder angeformte Enden auf. Hierdurch sind die axial auswärtigen Enden in radialer Richtung federelastisch beweglich. Dies ermöglicht ein leichtes und federelastisches Aufspreizen der Arme, wenn das Wellrohr auf den Steckerabschnitt des Leitungsverbinders aufgeschoben wird. Dann greifen die Vorsprünge der Arme rastend in die Nuten bzw. Wellentäler auf der Außenseite des Wellrohrs ein und pressen das Wellrohr auf den Steckerabschnitt. Schließlich wird ein Sicherungsring auf die Arme in axial einwärtiger Richtung bis zum Anschlag am Flansch des Leitungsverbinders aufgeschoben, welcher die Arme umschließt und so die Verbindung von Leitungsverbinder und Wellrohr sichert. Der Sicherungsring weist an seiner Innenseite einen Vorsprung auf, welcher in eine jeweilige entsprechende Nut auf der Außenseite der Arme eingreift und so seinerseits fixiert wird. Nachteilig ist allerdings der Umstand, dass bei der bekannten Fluidleitung bei höheren Drücken keine ausreichende Dichtigkeit zwischen Leitungsverbinder und Wellrohr erzielt wird.

Aufgrund einer ganz ähnlichen Ausgestaltung einer Fluidleitung in DE 10 2005 007 217 B3 ergibt sich auch bei dieser Fluidleitung der Nachteil der nicht ausreichenden Dichtigkeit bei höheren Drücken. Auch im Falle von DE 197 23 410 A1 ist die Fluidleitung bei hohen Drücken verbesserungswürdig.

Dieser Nachteil wird mit einer elastischen Dichtungshülse überwunden, wie dies in DE 10 2011 005 220 A1 offenbart ist. Die Dichtungshülse weist, wie das Wellrohr auch, eine gewellte Kontur auf, wobei der Durchmesser geringer als derjenige des Wellrohrs ist. Hierdurch lässt sich die Dichtungshülse in das Wellrohr einführen. Die Dichtungshülse umfasst an ihrem dem Leitungsverbinder zugewandten Ende einen nach radial außen vorstehenden Flansch. Der elastische Flansch der Dichtungshülse dient dem Anschlag an dem Stirnende des Wellrohrs und damit einer definierten Positionierung der Dichtungshülse innerhalb des Wellrohrs. Daraufhin wird das Wellrohr mitsamt der eingeschobenen Dichtungshülse auf einen Steckerabschnitt mit durchgängiger, praktisch rein zylindrischer Oberfläche aufgeschoben. Allerdings wurde festgestellt, dass trotz der Dichtungshülse gelegentlich Undichtigkeiten auftreten können. In der Folge muss bei der Herstellung der Verbindung sorgfältig überprüft werden, ob die Fluidleitung im Bereich des Steckerabschnitts tatsächlich dicht ist.

Der Erfindung liegt daher die Aufgabe zugrunde, eine Fluidleitung mit einem Leitungsverbinder und einem fluidführenden Wellrohr zu schaffen, wobei die Herstellung der zuverlässig fluiddichten Verbindung zwischen dem Leitungsverbinder und dem Wellrohr noch aufwandsärmer gestaltet werden soll.

Diese Aufgabe wird gelöst durch eine Fluidleitung mit den Merkmalen des Anspruchs 1.

Der Erfindung liegt zunächst die Erkenntnis zugrunde, dass beim Aufschieben des Wellrohrs mitsamt der elastischen Dichtungshülse aus DE 10 2011 005 220 A1 auf den Steckerabschnitt ein Kraftschluss bzw. Reibschluss zwischen der Dichtungshülse und dem Steckerabschnitt entsteht. Dies resultiert in einer hohen, in axialer Richtung aufzuwendenden Kraft. Es wurde gefunden, dass dies insbesondere in der relativ großen axialen Ausdehnung der Dichtungshülse begründet ist. Dies führt erstens zu einer kraftaufwendigen und umständlichen Montage und zweitens dazu, dass die Dichtungshülse ein Stück in das Wellrohr hinein verrutschen kann. Das Verrutschen ist aufgrund des elastisch ausgebildeten Flansches der Dichtungshülse möglich, so dass die Anschlagwirkung begrenzt ist. Dann ist die Dichtungshülse nicht mehr sichtbar und der Monteur weiß nicht, ob das Verrutschen der Dichtungshülse kritisch für die Fluidverbindung ist oder nicht. Der Erfindung liegt somit die Erkenntnis zugrunde, dass insbesondere in den Fällen mit leicht verrutschter, aber immer noch fluiddicht sitzender Dichtungshülse der Monteur die Fluiddichtigkeit überprüfen muss. Neben dem besagten axialen Kraftaufwand beim Aufschieben fällt hierdurch ein nicht unerheblicher Montageaufwand an.

Es wurde gefunden, dass ein Dichtungsring im Vergleich zu der Dichtungshülse einen deutlich geringeren axialen Kraftaufwand verursacht. Allerdings geht hiermit zugleich eine geringere Dichtwirkung einher, so dass ein Fachmann von dieser Maßnahme absehen würde. Es liegt der Erfindung jedoch ganz besonders die Erkenntnis zugrunde, dass dieser Nachteil durch das Vorsehen einer Nut am Steckerabschnitt für die Aufnahme eines Dichtungsrings überkompensiert wird. Denn die Nut stellt einen ausreichenden Formschluss für den Dichtungsring bereit, wodurch der Dichtungsring zuverlässig vor einem Verrutschen geschützt ist. Es wurde überraschend gefunden, dass ein von einer Nut gehaltener Dichtungsring am Steckerabschnitt immer noch eine völlig ausreichende und stets zuverlässige Dichtungswirkung bereitstellt, obwohl das Wellrohr auf seiner Innenseite eine stark alternierende Oberfläche aufweist. Denn durch die Nut wird ein Formschluss erzielt, welcher größere, von dem Wellrohr ausgehende und radial auf den Dichtungsring einwirkende Kräfte erlaubt. Diese größeren, radialen Kräfte erzielen eine größere Dichtwirkung. Gleichzeitig ist auch die Verbindung zwischen dem Wellrohr und dem Leitungsverbinder mit nur geringem Kraft- und Überprüfungsaufwand herstellbar, weil der Dichtring aufgrund der verbesserten Dichtwirkung deutlich kleinere Ausdehnungen in axialer Richtung annehmen kann und so einen entsprechend kleineren Kraft- bzw. Reibschluss erzeugt. Folglich liegt eine zuverlässig fluiddichte Fluidleitung vor, deren Wellrohr kontinuierlich ohne glatte Abschnitte und damit aufwandsarm hergestellt und aufgesteckt werden kann. Im Ergebnis wurde damit die eingangs genannte Aufgabe gelöst und eine zuverlässig dichte Fluidleitung geschaffen, die trotz des Wellrohrs mit geringem Aufwand hergestellt und aufgesteckt werden kann.

Im Vergleich mit der Fluidleitung aus DE 197 23 410 A1 wurde gefunden, dass die Nut am Steckerschaft von besonderer Bedeutung für die Fluiddichtigkeit ist. Denn durch die Nut liegt der Dichtring gleich an drei Stellen am Steckerabschnitt an (an beiden Nutwänden und an dem Nutgrund), wohingegen der Dichtring aus DE 197 23 410 A1 nur an der zylindrischen Oberfläche anliegt. Außerdem trägt die Nut zu einer verbesserten Zugfestigkeit bei, indem der Dichtring nicht nur in das Wellrohr, sondern auch in den Steckerabschnitt eingreift. Hierdurch wird auch im Falle von größeren, axialen Zugkräften eine höhere Fluiddichtigkeit erzielt.

Der Ausdruck "Wellrohr" meint bevorzugtermaßen Rohre mit alternierendem Innen- und Außendurchmesser, welche beispielsweise sinusförmig gewellt, aber auch rechtecksignalartig oder sägezahnartig gewellt sein können. Der Ausdruck "Wellrohr" ist historisch gewachsen und meint als Fachausdruck regelmäßig auch eine rechtecksignalartige Wellung der Wandung. Auch Begrifflichkeiten wie "gewellt" oder Begriffe mit dem Wortstamm "Welle" meinen bevorzugtermaßen Wellungen im weiteren Sinne und damit alternierende Innen- und Außendurchmesser und sind insbesondere nicht auf sinusförmige Wellungen der Wandung beschränkt.

Die Ausdrücke "Wellental" und "Wellenberg" sind bevorzugtermaßen auf die Außenseite des Wellrohrs bezogen, so dass die Wellentäler zweckmäßigerweise die Nuten auf der Außenseite des Wellrohrs darstellen, wobei die Wellentäler in axialer Richtung zweckmäßigerweise alternierend von Wellenbergen voneinander getrennt sind. Der Ausdruck "axial" bezieht sich bevorzugtermaßen auf eine Längs- bzw. Mittenachse des Steckerabschnitts bzw. des jeweils betreffenden Abschnitts des Leitungsverbinders bzw. des Wellrohrs. Es ist bevorzugt, dass die Mittenachse eine axiale, eine radiale und eine Umlaufrichtungskomponente bestimmt.

Es ist möglich, dass der Verbinderkörper einen Verbindungsabschnitt zur Verbindung mit einer anderen fluidführenden Komponente umfasst. Vorzugsweise umfasst der Verbinderkörper einen Fluidkanal zur fluidischen Verbindung des Steckerabschnitts und des Verbindungsabschnitts. Die andere fluidführende Komponente kann beispielsweise ein anderes Rohr oder ein Aggregat sein. Bei dem Aggregat mag es sich um einen Tank, eine Pumpe, ein Ventil, eine Düse oder dergleichen handeln. Der Verbindungsabschnitt des Verbinderkörpers liegt vorzugsweise in Strömungsrichtung an einem dem Steckerabschnitt gegenüberliegenden Ende des Verbinderkörpers.

Der Verbindungsabschnitt kann ein Bestandteil einer form-, kraft- und/oder stoffschlüssigen Verbindung mit der anderen fluidführenden Komponente sein. Beispielsweise kann der Verbindungsabschnitt Bestandteil eines kraftschlüssigen Presssitzes zwischen dem Leitungsverbinder bzw. dem Verbinderkörper einerseits und der anderen fluidführenden Komponente sein. Es ist möglich, dass der Verbindungsabschnitt per Schweißung mit der anderen fluidführenden Komponente verbunden ist. Gemäß einer Ausführungsform ist der Verbindungsabschnitt des Leitungsverbinders bzw. Verbinderkörpers integral mit der anderen fluidführenden Komponente verbunden. Es ist möglich, dass der Verbindungsabschnitt bzw. der Verbinderkörper - etwa per Spritzguss - integral an die andere, fluidführende Komponente angeformt ist.

Vorzugsweise umfasst der Steckerabschnitt eine Stirnwand. Mit Vorteil verjüngt sich ein Ende des Steckerabschnitts zur Stirnwand hin, so dass ein Aufstecken des Wellrohrs auf den Steckerabschnitt erleichtert wird. Der Ausdruck "axial einwärts" meint vorzugsweise eine axiale Richtung des Steckerabschnitts, welche von dem Stirnende des Steckerabschnitts in das Innere des Steckerabschnitts bzw. des Verbinderkörpers bzw. des Leitungsverbinders hinein zeigt. Der Ausdruck "axial einwärts" gillt vorzugsweise auch für das Wellrohr, so dass das Wellrohr keinen eigenen Bezugsrahmen für die Richtungsorientierungen "einwärts" bzw. "auswärts" darstellt. Der Ausdruck "axial" einwärts bezogen auf das Wellrohr meint demzufolge mit Vorteil "zum Leitungsverbinder hin".

Gemäß einer sehr bevorzugten Ausführungsform ist der auf den Steckerabschnitt aufgesteckte Abschnitt des Wellrohrs wenigstens abschnittsweise und vorzugsweise vollständig gewellt ausgebildet. Es ist bevorzugt, dass das gesamte Wellrohr wenigstens entlang von 50 % bzw. 70 % bzw. 90 % bzw. 99 % seiner axialen Ausdehnung gewellt ausgebildet ist. Es ist ganz besonders bevorzugt, dass das Wellrohr entlang seiner gesamten axialen Ausdehnung durchgängig gewellt ausgebildet ist. Hierdurch wird erreicht, dass bei der Herstellung des Wellrohrs nicht auf die exakten axialen Längen der gewellten bzw. nicht gewellten Abschnitte geachtet werden muss. Hierbei ergeben sich Vereinfachungen bei der Herstellung, insbesondere bei der Formung der Wellung nach der Extrusion bzw. Koextrusion, sowie auch beim Ablängen.

Es ist sehr bevorzugt, dass die Befestigungsvorrichtung in axialer Richtung wenigstens einen Formschluss mit dem Wellrohr eingegangen ist oder eingehen kann. Vorzugsweise greift die Befestigungsvorrichtung auf eine Außenseite des Wellrohrs in wenigstens ein Wellental ein. Bevorzugtermaßen umfasst die Befestigungsvorrichtung wenigstens einen Haltevorsprung und weiter vorzugsweise wenigstens zwei Haltevorsprünge. Mit Vorteil greift der Haltevorsprung bzw. greifen die Haltevorsprünge in wenigstens ein Wellental des Wellrohrs ein. Zweckmäßigerweise liegen die zwei Haltevorsprünge einander bezüglich der Mittenachse diametral gegenüber. Es ist möglich, dass in axialer Richtung bzw. im Längsschnitt der Fluidleitung mehrere Haltevorsprünge hintereinander angeordnet sind. Vorzugsweise springt der Haltevorsprung bzw. springen die Haltevorsprünge in radialer Richtung vor.

Es ist bevorzugt, dass der Haltevorsprung bzw. die Haltevorsprünge auf ihrer axial auswärtigen Seite eine Einführfläche aufweisen, wobei die Einführfläche gerundet oder abgeschrägt zur leichteren Einführung der Wellenberge des Wellenrohrs ausgebildet ist. Es ist möglich, dass eine axial innenliegende Seite des Haltevorsprungs bzw. der Haltevorsprünge anders ausgebildet ist als die Einführfläche. Bevorzugermaßen ist ein Herausziehen des Wellrohrs schwieriger und damit eine axial auswärts wirkende, auf das Wellrohr einwirkende Zugkraft zum Herausziehen größer als eine axial einwärts wirkende Druckkraft auf das Wellrohr zum Aufstecken des Wellrohrs auf den Steckerabschnitt. Vorzugsweise umfasst die axial innenliegende Seite des Haltevorsprungs bzw. der Haltevorsprünge in einem Längsschnitt eine Kontur, welche sich stärker in radialer Richtung erstreckt im Vergleich zur Kontur der axial auswärtigen Seite des Haltevorsprungs bzw. der Haltevorsprünge.

Gemäß einer besonders bevorzugten Ausführungsform übt die Befestigungsvorrichtung bzw. die Arme bzw. ein Sicherungselement eine Klemmkraft auf das Wellrohr bzw. auf den Dichtungsring in radialer Richtung aus. Hierdurch wird zunächst eine besonders fluiddichte Ausgestaltung der Fluidleitung erreicht. Außerdem unterstützt eine große Klemmkraft die mechanische Fixierung des Wellrohrs am Leitungsverbinder. Eine in radialer Richtung wirkende Klemmkraft unterstützt insbesondere einen/den Formschluss zwischen der Befestigungsvorrichtung und dem Wellrohr.

Die Befestigungsvorrichtung umfasst wenigstens zwei und vorzugsweise wenigstens drei bzw. vier Arme. Mit Vorteil sind die zwei Arme diametral bzw. die vier Arme paarweise zueinander diametral bezüglich der Mittenachse angeordnet. Zweckmäßigerweise erstreckt sich die längste Ausdehnung der Arme in axialer bzw. im Wesentlichen in axialer Richtung. Mit Vorteil ist ein axial einwärtiges Ende der Arme an dem Steckerabschnitt und/oder dem Verbindungsabschnitt und/oder an einem/dem Rohranschlag und/oder an einem Flansch des Leitungsverbinders bzw. Verbinderkörpers angeschlossen. Erfindungsgemäß ist ein axial auswärtiges Ende der Arme frei, so dass das axial auswärtige Ende der Arme in radialer Richtung federelastisch beweglich ist. Es ist bevorzugt, dass die Arme und der Steckerabschnitt in einem Längsschnitt einen Zwischenraum definieren, in welchen das Wellrohr einschiebbar ist bzw. eingeschoben ist. Es ist sehr bevorzugt, dass die Arme eine Klemmkraft auf das Wellrohr bzw. den Dichtring in radialer Richtung ausüben. Besonders vorzugsweise weisen die Arme an ihren radialen Innenseiten jeweils den Haltevorsprung bzw. die Haltevorsprünge auf.

Mit Vorteil umfasst die Fluidleitung bzw. die Befestigungsvorrichtung bzw. das Wellrohr wenigstens ein Innenelement, wobei das wenigstens eine Innenelement bevorzugtermaßen ein Elastomer umfasst bzw. gummielastisch ausgebildet ist, wobei das Innenelement vorzugsweise in radialer Richtung zwischen der Befestigungsvorrichtung bzw. einem Arm und dem Wellrohr angeordnet ist. Das wenigstens eine Innenelement mag an einer radialen Innenseite eines Arms angeordnet bzw. befestigt sein. Es ist möglich, dass das wenigstens eine Innenelement den Haltevorsprung bzw. die Haltevorsprünge aufweist. Jedem der Arme kann ein Innenelement zugeordnet sein. Es ist möglich, dass das Innenelement mittels Klebung an der Innenseite des Arms befestigt ist.

Vorzugsweise ist das Innenelement auf einer Außenseite des Wellrohrs angeordnet bzw. befestigt. Es ist sehr bevorzugt, dass das Innenelement als Hülse ausgebildet ist. Vorzugsweise umschließt das Innenelement das Ende des Wellrohrs, welches Ende auf den Steckerabschnitt aufgesteckt ist. Es ist sehr bevorzugt, dass das Innenelement gewellt ausgebildet ist. Besonders vorzugsweise ist das Innenelement mittels Kraftschluss und/oder Formschluss auf dem Ende des Wellrohrs befestigt. Mit Vorteil ist das Innenelement als gewellte Hülse ausgebildet und mittels Kraftschluss auf dem Ende des Wellrohrs befestigt. Elastische Innenelemente erzeugen einen höheren Kraftschluss bzw. Reibschluss zwischen der Befestigungsvorrichtung bzw. den Armen und dem Wellrohr, wodurch die Befestigung des Wellrohrs am Leitungsverbinder verbessert wird. Es ist sehr bevorzugt, dass die Arme federelastisch ausgebildet sind und/oder das Innenelement oder die Innenelemente gummielastisch ausgestaltet sind.

Es ist sehr bevorzugt, dass der Leitungsverbinder einen Rohranschlag zum Anschlagen in axialer Richtung eines Stirnendes des Wellrohrs in axialer Richtung umfasst. Mit Vorteil ist das Wellrohr so abgelängt und/oder ist der Leitungsverbinder so ausgebildet bzw. der Rohranschlag so positioniert bzw. dimensioniert, dass der Dichtungsring - in einem vollständig auf den Steckerabschnitt aufgeschobenen Zustand des Wellrohrs bzw. bei Anschlag an den Rohranschlag - an einer Innenseite eines Wellenberges des Wellrohrs anliegt bzw. von der Innenseite des Wellenberges aufgenommen ist. Es ist von Vorteil, dass das Wellrohr so abgelängt ist und/oder der Leitungsverbinder so ausgebildet ist bzw. der Rohranschlag so positioniert bzw. dimensioniert ist, dass der Haltevorsprung bzw. die Haltevorsprünge der Befestigungsvorrichtung bzw. eines Arms oder mehrerer Arme in ein Wellental bzw. in Wellentäler des Wellrohrs eingreift/eingreifen. Es ist bevorzugt, dass der Haltevorsprung im vollständig aufgeschobenen Zustand axial auswärts des Dichtrings des Wellrohrs angeordnet ist, so dass der Dichtring vorzugsweise zur Fixierung des Wellrohrs beiträgt bzw. den Haltevorsprung hintergreift. Vorteilhafterweise ist das Wellrohr flexibel ausgebildet, so dass kleinere Abweichungen vom vollständig aufgeschobenen Zustand des Wellrohrs tolerierbar sind und der Dichtring dennoch auf einer Innenseite eines Wellrohrs zum Liegen kommt.

Vorzugsweise umfasst der Steckerabschnitt wenigstens abschnittsweise und bevorzugtermaßen entlang von wenigstens 20 % bzw. 30 % bzw. 40 % bzw. 50 % der Länge des Steckerabschnitts eine zylindrische Oberfläche bzw. Außenseite. Hierdurch wird erreicht, dass keine vom Steckerabschnitt ausgehende, nach axial auswärts gerichtete Kraft auf das Wellrohr einwirkt.

Mit Vorteil ist der Verbinderkörper einstückig und vorzugsweise integral - insbesondere mittels Spritzguss - ausgebildet. Zweckmäßigerweise umfassen der Leitungsverbinder und/oder das Wellrohr einen Kunststoff. Es ist möglich, dass das Wellrohr eine einschichtige oder mehrschichtige Wandung aufweist. Zweckmäßigerweise ist das Wellrohr extrudiert bzw. koextrudiert. Es ist bevorzugt, dass der Verbindungskörper separat zu einem anderen Rohr bzw. zu einer anderen, fluidischen Komponente hergestellt ist. Zweckmäßigerweise umfasst der Verbindungsabschnitt eine Stirnwand, wobei die Stirnwand praktischerweise der anderen, fluidischen Komponente zugewandt ist.

Gemäß einer bevorzugten Ausführungsform definiert der Leitungsverbinder bzw. die Befestigungsvorrichtung einen für das Einführen des Wellrohrs geöffneten Zustand und einen für das Fixieren des Wellrohrs geschlossenen Zustand. Zweckmäßigerweise definieren die Arme den geöffneten Zustand und den geschlossenen Zustand. Es ist von Vorteil, dass die Arme im geöffneten Zustand der Befestigungsvorrichtung in radialer Richtung zueinander einen größeren Abstand aufweisen im Vergleich zum geschlossenen Zustand. Zweckmäßigerweise ist in den Armen im geöffneten Zustand weniger federelastische Rückstellenergie gespeichert im Vergleich zum geschlossenen Zustand. Vorzugsweise ist der Leitungsverbinder so ausgebildet, dass die Arme bzw. die Befestigungsvorrichtung im geschlossenen Zustand sicherbar sind/ist, so dass die in den Armen bzw. der Befestigungsvorrichtung enthaltene Rückstellenergie mittels eines/des Sicherungselements gespeichert ist und vorzugsweise durch Entfernen des Sicherungselements freisetzbar ist. Bevorzugtermaßen ist die in den Armen bzw. der Befestigungsvorrichtung gespeicherte Rückstellenergie nur dann freisetzbar, wenn das Sicherungselement entfernt bzw. bewegt wurde.

Der Steckerabschnitt mag eine axiale Länge von einer Stirnwand bis zu einem/dem Rohranschlag aufweisen, wobei der Dichtungsring bzw. die Nut in einem der drei mittleren Fünftel der axialen Länge des Steckerabschnitts angeordnet ist/sind. Bevorzugtermaßen ist/sind der Dichtungsring und/oder die Nut in dem mittleren Fünftel der axialen Länge des Steckerabschnitts befindlich. Es ist von Vorteil, dass eine Flächennormale eines Nutgrunds der Nut sich in radialer Richtung erstreckt. Es ist zweckmäßigerweise, dass der Dichtungsring entlang eines Längsschnitts des Steckerabschnitts einen gerundeten, vorzugsweise einen ovalen bzw. kreisrunden, Querschnitt aufweist.

Gemäß einer besonders bevorzugten Ausführungsform umfasst der Leitungsverbinder bzw. die Fluidleitung ein Sicherungselement zum Sichern eines/des geschlossenen Zustands der Befestigungsvorrichtung. Es ist bevorzugt, dass das Sicherungselement auf die Befestigungsvorrichtung, vorzugsweise in axialer und besonders vorzugsweise in axial auswärtiger Richtung, aufschiebbar ist. Mit Vorteil ist das Sicherungselement separat zum Verbinderkörper bzw. zur Befestigungsvorrichtung ausgebildet. Mit Vorteil umfasst das Sicherungselement einen Kunststoff. Bevorzugtermaßen ist das Sicherungselement ringartig ausgebildet. Vorzugsweise umläuft das Sicherungselement die Befestigungsvorrichtung bzw. den Verbinderkörper bzw. ein Ende des Wellrohrs in Umlaufrichtung wenigstens teilweise und vorzugsweise vollständig.

Es ist besonders bevorzugt, dass der Leitungsverbinder bzw. die Fluidleitung so ausgebildet ist, dass das Sicherungselement relativ zum Verbinderkörper von einer Öffnungsposition zu einer Schließposition und umgekehrt bewegbar ist. Es ist sehr bevorzugt, dass der Übergang von der Öffnungsposition zur Schließposition durch eine Verschiebung des Sicherungselements - vorzugsweise in axialer und besonders vorzugsweise in axial auswärtiger Richtung - erreichbar ist. Es ist bevorzugt, dass das Sicherungselement einen/den geschlossenen Zustand der Befestigungsvorrichtung sichert bzw. definiert. Die/Eine Sicherung des geschlossenen Zustands der Befestigungsvorrichtung durch das Sicherungselement kann kraft- und/oder formschlüssig ausgebildet sein. Mit Vorteil ist das Sicherungselement in der Öffnungsposition und/oder in der Schließposition mit dem Verbinderkörper bzw. der Befestigungsvorrichtung verrastet. Zweckmäßigerweise befindet sich das Sicherungselement in der Schließposition während sich die Befestigungsvorrichtung gleichzeitig im geschlossenen Zustand befindet. Zweckmäßigerweise befindet sich das Sicherungselement in einer Öffnungsposition, während sich die Befestigungsvorrichtung in einem geöffneten Zustand befindet. Es ist von Vorteil, dass der Verbinderkörper bzw. die Befestigungsvorrichtung eine Führung zum Führen des Sicherungselements von der Öffnungsposition in die Schließposition und vorzugsweise auch umgekehrt umfasst, wobei die Führung vorzugsweise lediglich eine Bewegung des Sicherungselements in axialer Richtung gestattet.

Es ist sehr bevorzugt, dass das Sicherungselement beim Übergang von der Öffnungsposition in die Schließposition die Arme nach radial innen drückt, so dass die Befestigungsvorrichtung in den geschlossenen Zustand übergeht. Es ist besonders bevorzugt, dass der Leitungsverbinder bzw. das Sicherungselement bzw. der Verbinderkörper bzw. die Befestigungsvorrichtung so ausgebildet ist/sind, dass das Sicherungselement beim Übergang von der Öffnungsposition in die Schließposition die Arme der Befestigungsvorrichtung - vorzugsweise durch eine Verschiebung in axialer und besonders vorzugsweise in axial auswärtiger Richtung - in radialer Richtung aufeinander zu bewegt werden, so dass vorzugsweise eine Klemmkraft in radialer Richtung auf das Wellrohr bzw. eine zusätzliche Klemmkraft auf den Dichtungsring einwirkt.

Der Vorteil des Sicherungselements besteht zum einen in der Sicherung des geschlossenen Zustands der Befestigungsvorrichtung. Vorteilhaft ist darüber hinaus, dass das Sicherungselement eine große, radiale Klemmwirkung auf die Befestigungsvorrichtung, das Wellrohr bzw. den Dichtring ausüben kann. Das Sicherungselement stellt außerdem eine Anzeigefunktion bereit und erlaubt eine sehr einfache, visuelle Unterscheidung zwischen dem geschlossenen und dem geöffneten Zustand der Befestigungsvorrichtung.

Gemäß einer bevorzugten Ausführungsform ist wenigstens ein Teil der Befestigungsvorrichtung separat vom Verbinderkörper hergestellt bzw. spritzgegossen worden. Zweckmäßigerweise ist die Befestigungsvorrichtung bzw. die gesamte Befestigungsvorrichtung bzw. der wenigstens eine separat vom Verbinderkörper hergestellte Teil der Befestigungsvorrichtung mit dem Verbinderkörper kraft-, form- oder stoffschlüssig verbunden. Mit Vorteil ist der wenigstens eine separat vom Verbinderkörper hergestellte Teil der Befestigungsvorrichtung nicht integral mit dem Verbinderkörper verbunden. Der wenigstens eine separat vom Verbinderkörper hergestellte Teil der Befestigungsvorrichtung umfasst vorzugsweise die Arme und weiter vorzugsweise eine Armhülse. Die Armhülse ist vorzugsweise wenigstens teilweise umlaufend und vorzugsweise vollständig umlaufend ausgebildet. Es ist bevorzugt, dass die Arme an der Armhülse angeschlossen sind und vorzugsweise integral mit der Armhülse verbunden sind. Der wenigstens eine Teil der Befestigungsvorrichtung umfassend die Arme und die Armhülse ist bevorzugtermaßen mittels Spritzguss separat vom Verbinderkörper hergestellt worden. Es ist möglich, dass der wenigstens eine separat vom Verbinderkörper hergestellte Teil der Befestigungsvorrichtung mittels Schweißung nachträglich mit dem Verbinderkörper einstückig (aber nicht integral) verbunden wurde. Die Armhülse mag eine Armhülsenbefestigung umfassen. Die Armhülsenbefestigung kann als Rastelement zur Verrastung mit dem Verbinderkörper bzw. Rohranschlag ausgebildet sein. Es ist möglich, dass die Armhülse, vorzugsweise mit Hilfe der Armhülsenbefestigung, an dem Verbinderkörper bzw. den Rohranschlag bzw. dem Steckerabschnitt bzw. dem Verbindungsabschnitt kraft, form- oder stoffschlüssig befestigt ist. Zweckmäßigerweise umfasst der Verbinderkörper bzw. Rohranschlag ein Rastmittel zur Verbindung mit der Armhülsenbefestigung. Die separate Herstellung des wenigstens einen Teils der Befestigungsvorrichtung und insbesondere der Arme separat vom Verbinderkörper erlaubt aufgrund einfacherer Spritzgussgeometrien eine bisweilen günstigere Herstellung des Leitungsverbinders.

Gemäß einer nicht von den Ansprüchen abgedeckten Ausführungsform umfasst der Leitungsverbinder einen Schließer. wobei der Schließer um die Mittenachse wenigstens abschnittsweise drehbar ist, wobei der Schließer so ausgebildet ist, dass er durch die Drehung mit wenigstens einem Wellental des Wellrohrs in Eingriff bringbar ist. Bevorzugtermaßen umfasst der Schließer wenigstens zwei Schließerarme. Zweckmäßigerweise umfasst wenigstens ein Schließerarm einen bzw. den Haltevorsprung zum Eingriff in ein Wellental des Wellrohrs. Mit Vorteil weist der Schließer eine Schließerhülse auf. Zweckmäßigerweise sind die Schließerarme an die Schließerhülse angeschlossen. Vorzugsweise ist der Schließer einstückig und insbesondere integral - vorzugsweise mittels Spritzguss - ausgebildet. Es ist bevorzugt, dass der Schließer in radialer Richtung kompressibel ist. Es ist sehr bevorzugt, dass die Schließerarme aufgrund der Drehbewegung des Schließers einander in radialer Richtung annähern. Zweckmäßigerweise ist die Schließerhülse drehbar auf dem Verbinderkörper gelagert. Es ist von Vorteil, dass der Schließer bzw. die Schließerarme aufgrund der Drehung um die Mittenachse und aufgrund eines Kontakts mit einer radialen Innenseite der Arme der Befestigungsvorrichtung kontinuierlich in radialer Richtung gestaucht wird/aufeinander zu bewegt werden. Der Schließer definiert vorzugsweise eine Öffnungsposition und/oder eine Schließposition. Die Öffnungsposition kann durch einen Anschlag bzw. Rastmittel des Schließers an dem Verbinderkörper und/oder an der Befestigungsvorrichtung definiert sein. Die Schließposition des Schließers kann durch einen Anschlag bzw. durch Rastmittel am Verbinderkörper bzw. an der Befestigungsvorrichtung definiert sein. Es ist möglich, dass die Schließposition des Schließers aufgrund eines Kraftschlusses zwischen den Schließerarmen und den Armen der Befestigungsvorrichtung definiert ist.

Gemäß einer Ausführungsform ist die Befestigungsvorrichtung so ausgebildet, dass das Wellrohr beim Aufschieben auf den Steckerabschnitt mit der Befestigungsvorrichtung verrastet. Hierdurch wird eine sehr schnelle Verbindung erzielt. Es ist von Vorteil, dass die Arme der Befestigungsvorrichtung in einem entspannten Zustand so ausgebildet sind, dass der Haltevorsprung bzw. die Haltevorsprünge des jeweiligen Arms in das Wellental bzw. die Wellentäler des Wellrohres eingreifen. Vorzugsweise sind das Wellrohr bzw. die Arme so ausgebildet, dass die Wellenberge die Arme nach radial außen drücken, so dass eine elastische Rückstellenergie in den Armen gespeichert wird, bis der Haltevorsprung bzw. die Haltevorsprünge (wieder) in ein Wellental eingreifen können. Es ist bevorzugt, dass die Arme bzw. Haltevorsprünge bei Eingriff in ein Wellental bzw. in Wellentäler eine nach radial innen wirkende Klemmkraft auf das Wellental bzw. die Wellentäler ausübt/ausüben. Es ist bevorzugt, dass der Leitungsverbinder bzw. der Verbinderkörper bzw. die Befestigungsvorrichtung bzw. die Arme bzw. das Wellrohr so ausgebildet ist/sind, dass das Wellrohr während des Aufschiebens mehrere Rastvorgänge hintereinander erfährt.

Gemäß einer besonders bevorzugten Ausführungsform weist der Leitungsverbinder eine Anzeigevorrichtung, insbesondere ein Anzeigeelement und/oder einen Anzeigemarker, zur Anzeige eines/des geschlossenen Zustands der Befestigungsvorrichtung auf. Das Anzeigeelement kann beweglich oder unbeweglich ausgestaltet sein. Es ist von Vorteil, dass ein/das Sicherungselement bzw. ein/der Schließer das Anzeigeelement ist, so dass über die Position des Sicherungselements bzw. Schließers der geschlossene Zustand der Befestigungsvorrichtung bzw. Fluidleitung angezeigt wird. Es ist bevorzugt, dass das Anzeigeelement in axialer und/oder radialer Richtung beweglich ist.

Ganz besonders bevorzugt umfasst der Anzeigemarker eine visuell oder elektromagnetisch auslesbare Einrichtung. Es ist möglich, dass die elektromagnetisch auslesbare Einrichtung mittels Funk auslesbar ist. Die Fluidleitung mag einen Sensor zur Detektion des geschlossenen Zustands der Befestigungsvorrichtung umfassen. Der Sensor kann mit einer Kommunikationseinheit, beispielsweise einem RFID-Chip, verbunden sein, so dass vorzugsweise ein externes Lesegerät den Zustand der Befestigungsvorrichtung auslesen kann. Die visuell auslesbare Einrichtung kann beispielsweise ein Symbol, ein Strichcode oder ein QR-Code sein. Gemäß einer bevorzugten Ausführungsform erscheint die visuell auslesbare Einrichtung aufgrund der Überführung des Sicherungselements bzw. des Schließers von der Öffnungsposition in die Schließposition. Es ist ganz besonders bevorzugt, dass der Anzeigemarker bzw. die visuell auslesbare Einrichtung in der Öffnungsposition oder in der Schließposition von dem Sicherungselement bzw. dem Schließer verdeckt ist und in der Schließposition bzw. der Öffnungsposition des Sicherungselements bzw. Schließers optisch durch ein Lesegerät auslesbar ist.

Die eingangs genannte Aufgabe wird gelöst durch eine Verwendung der Fluidleitung in einem Fahrzeug, vorzugsweise in einem Landfahrzeug, weiter vorzugsweise in einem Straßenfahrzeug. Es ist bevorzugt, dass das Fahrzeug ein Elektrofahrzeug ist und eine Batterie zum Antrieb eines Elektromotors aufweist. Bevorzugtermaßen ist die Fluidleitung Bestandteil eines Kühlmittelkreises zum Kühlen der Batterie.

Die Erfindung wird nachfolgend anhand von mehreren Ausführungsbeispielen mit mehreren schematischen Figuren beschrieben. Es zeigen
- Fig. 1: einen Längsschnitt durch eine erste erfindungsgemäße Fluidleitung,
- Fig. 2: einen Längsschnitt durch eine zweite erfindungsgemäße Fluidleitung mit einer Befestigungsvorrichtung in einem geöffneten Zustand,
- Fig. 3: die Fluidleitung aus Fig. 2 mit der Befestigungsvorrichtung in einem geschlossenen Zustand,
- Fig. 4: eine dritte erfindungsgemäße Fluidleitung in einem Längsschnitt,
- Fig. 5: eine vierte Fluidleitung in einem Längsschnitt,
- Fig. 6A: einen Querschnitt der Fluidleitung aus Fig. 5 mit einer Befestigungsvorrichtung in einem geöffneten Zustand und
- Fig. 6B: die Fluidleitung aus Fig. 5 im Querschnitt mit einer Befestigungsvorrichtung im geschlossenen Zustand.

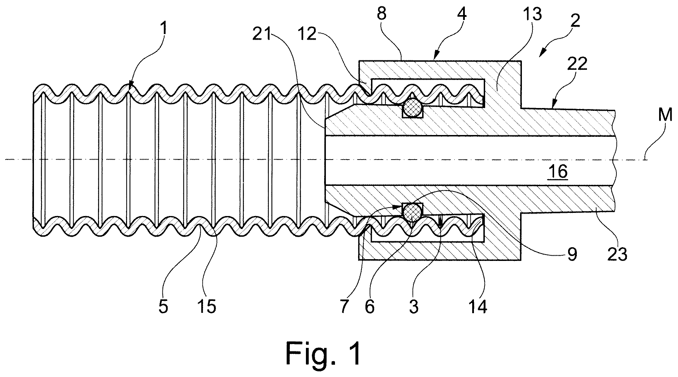

Fig. 1 zeigt ein erstes Ausführungsbeispiel der Erfindung in Form einer Fluidleitung 1, 2 umfassend ein Wellrohr 1 sowie einen Leitungsverbinder 2. Das Wellrohr 1 mag einen oder mehrere Kunststoffe umfassen und insbesondere als Mehrschichtrohr ausgebildet sein. Der Leitungsverbinder 2 umfasst einen Verbinderkörper 22, wobei der Verbinderkörper 22 vorzugsweise einstückig und besonders vorzugsweise integral ausgebildet ist. Der Verbinderkörper 22 umfasst einen Steckerabschnitt 3, welcher in das Wellrohr 1 eingesteckt ist. Der Steckerabschnitt 3 weist eine Mittenachse M auf, welche eine axiale, eine radiale sowie eine Umfangsrichtung definiert.

Der Verbinderkörper 22 umfasst vorzugsweise einen Verbindungsabschnitt 23. Praktischerweise verbindet der Fluidkanal 16 den Steckerabschnitt 3 fluidisch mit dem Verbindungsabschnitt 23. Der Verbindungsabschnitt 23 mag kraft-, form- oder stoffschlüssig mit anderen, hier nicht dargestellten, fluidführenden Komponenten verbunden sein. Die anderen, fluidführenden Komponenten können andere Rohre oder Aggregate sein. Aggregate sind beispielsweise Pumpen, Düsen, Tanks und dergleichen mehr. Der Verbindungsabschnitt 23 kann allerdings auch integral mit der anderen fluidführenden Komponente verbunden sein. Es ist möglich, dass der Verbinderkörper 2 beispielsweise per Spritzguss an der anderen, fluidführenden Komponente angeformt ist. Zweckmäßigerweise verbindet der Fluidkanal 16 das Wellrohr 1 fluidisch mit der anderen, fluidführenden Komponente.

Das Wellrohr 1 des Ausführungsbeispiels gemäß Fig. 1 ist sinusartig gewellt. In anderen, hier nicht dargestellten Ausführungsbeispielen mögen die Wellrohre rechteckartig gewellt ausgestaltet sein. Auf der Außenseite des Wellrohrs 1 wechseln sich zweckmäßigerweise Wellentäler 5 mit Wellenbergen 15 ab. Es ist bevorzugt, dass das Wellrohr 1 im axialen Überlappbereich mit dem Steckerabschnitt 3 wenigstens abschnittsweise gewellt und vorzugsweise durchgängig gewellt ausgebildet ist. Ganz besonders bevorzugt ist das gesamte Wellrohr 1 durchgängig gewellt ausgestaltet.

Mit Blick auf Fig. 1 ist weiter erkennbar, dass der Leitungsverbinder 2 einen Dichtring 6 umfasst. Der Dichtring 6 umfasst vorzugsweise ein elastisches Material und besteht weiter vorzugsweise lediglich aus dem elastischen Material. Der Dichtungsring 6 ist in einer Nut 7 angeordnet, wobei die Nut 7 im Bereich des Steckerabschnitts 3 und vorzugsweise auf einer Außenseite des Steckerabschnitts 3 angeordnet ist. Die Nut 7 umfasst zweckmäßigerweise einen Nutgrund 9.

Der Leitungsverbinder 2 gemäß Fig. 1 umfasst eine Befestigungsvorrichtung 4, wobei die Befestigungsvorrichtung 4 das Wellrohr 1 an dem Steckerabschnitt 3 befestigt. Mit Vorteil umfasst die Befestigungsvorrichtung 4 wenigstens zwei Arme 8, welche vorzugsweise hinsichtlich der Mittenachse M diametral einander gegenüberliegen. Es ist bevorzugt, dass die Befestigungsvorrichtung 4 bzw. Arme 8 jeweils wenigstens einen nach radial innen vorragenden Haltevorsprung 12 aufweist/aufweisen. Es ist bevorzugt, dass die Haltevorsprünge 12 an axialen, freien Enden der Arme 8 angeordnet sind. Bevorzugtermaßen weisen die Haltevorsprünge 12 angeschrägte Einführflächen an ihrer axialen Außenseite zum erleichterten Einführen des Wellrohrs 1 auf.

Vorzugsweise sind die Arme 8 nach Fig. 1 an ihren freien Enden in radialer Richtung federelastisch ausgebildet, so dass die Wellenberge 15 die Arme 8 bei einem Aufstecken des Wellrohrs 1 auf den Steckerabschnitt 3 elastisch nach radial außen vorspannen. Daraufhin geben die Arme 8 bzw. Haltevorsprünge 12 bei Erreichen des nächsten Wellentals 5 ihre gespeicherte Rückstellenergie frei und greifen in das entsprechende Wellental 5 ein. Bevorzugtermaßen sind die Haltevorsprünge 12 an ihrer axialen Innenseite nicht angeschrägt oder gerundet ausgebildet, so dass ein Herausziehen des Wellrohrs 1 entsprechend schwieriger ist oder idealerweise unterbunden wird.

Es ist sehr bevorzugt, dass die Befestigungsvorrichtung 4 einen Rohranschlag 13 aufweist, s. Fig. 1. Der Leitungsverbinder 2 ist vorzugsweise so ausgebildet, dass das Wellrohr 1 bei einem vollständigen Aufschieben auf den Steckerabschnitt 3 mit einem Stirnende 14 an den Rohranschlag 13 anschlägt. Es ist von Vorteil, dass der Rohranschlag 13 eine axiale Länge des Überlapps zwischen Wellrohr 1 und Steckerabschnitt 3 definiert. Es ist ganz besonders bevorzugt, dass das Wellrohr 1 und/oder der Leitungsverbinder 2 so ausgebildet ist/sind, dass der Dichtungsring 6 in einem vollständig auf den Steckerabschnitt 3 aufgeschobenen Zustand des Wellrohrs 1 an einer innenseitigen Einbuchtung eines Wellenbergs 15 anliegt. Es ist sehr bevorzugt, dass das Wellrohr 1 und der Leitungsverbinder 2 so ausgebildet sind, dass in einem vollständig auf den Steckerabschnitt 3 aufgeschobenen Zustand des Wellrohrs 1 die Haltevorsprünge 12 in ein Wellental 5 des Wellrohrs 1 eingreifen.

Im Ausführungsbeispiel gemäß Fig. 1 ist der Rohranschlag 13 einstückig und vorzugsweise integral mit den Armen 8 bzw. den Haltevorsprüngen 12 verbunden. Mit Vorteil ist der Rohranschlag 13 bzw. sind die Arme 8 einstückig bzw. integral mit dem Steckerabschnitt 3 und/oder dem Verbindungsabschnitt 23 bzw. dem Verbinderkörper 22 verbunden.

Besonders vorzugsweise üben die Arme 8 bzw. die Haltevorsprünge 12 nach Fig. 1 eine radial nach innen auf das Wellental 5 einwirkende Kraft im vorzugsweise vollständig auf den Steckerabschnitt 3 aufgeschobenen Zustand des Wellrohrs 1 aus. Hierdurch wird der Kraftschluss mit dem Dichtungsring 6 vergrößert. Das Ausführungsbeispiel gemäß Figur 1 ist insgesamt besonders dazu geeignet, mittels lediglich einer Aufsteckbewegung eine fluiddichte Verbindung zwischen dem Leitungsverbinder 2 und dem Wellrohr 1 zu erzeugen. Das Ausführungsbeispiel gemäß Fig. 1 ist eher für Fluidleitungen 1, 2 bzw. Fluidanwendugen mit geringeren Drücken geeignet.

In einem hier nicht dargestellten Ausführungsbeispiel greifen die Haltevorsprünge 12 in ein Wellental 5 ein, welches benachbart zum Wellenberg 15 des Dichtungsrings 6 im vollständig eingeschobenen Zustand des Wellrohrs 1 ist. Ganz besonders bevorzugt sind die Haltevorsprünge 12 in dem Wellental 5 befindlich, welches in axial auswärtiger Richtung direkt auf den Wellenberg 15 mit dem Dichtungsring 6 folgt.

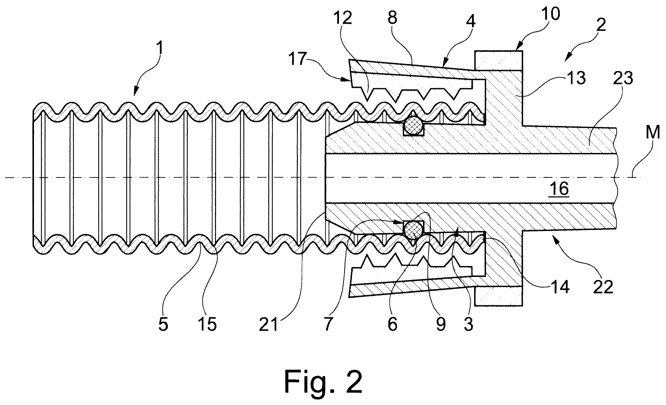

Das zweite Ausführungsbeispiel gemäß Fig. 2 ist hinsichtlich des Wellrohrs 1 identisch ausgebildet. Auch ist der Leitungsverbinder 2 hinsichtlich des Fluidkanals 16, des Verbindungsabschnitts 23, des Steckerabschnitts 3, des Dichtungsrings 6 sowie der Nut 7 identisch zum ersten Ausführungsbeispiel. Die Unterschiede zwischen dem ersten Ausführungsbeispiel nach Fig. 1 und dem zweiten Ausführungsbeispiel nach Fig. 2 sind vor allem in der Befestigungsvorrichtung 4 zu finden.

Die Befestigungsvorrichtung 4 umfasst nach Fig. 2 vorzugsweise wenigstens zwei Arme 8, welche sich bevorzugtermaßen mit ihrer Längsausdehnung in axialer Richtung erstrecken. Der Leitungsverbinder 2 umfasst zweckmäßigerweise einen Rohranschlag 13. Der Rohranschlag 13 ist vorzugsweise einstückig bzw. integral mit dem Verbindungsabschnitt 23 bzw. dem Steckerabschnitt 3 verbunden. Im vorliegenden Ausführungsbeispiel nach Fig. 2 ist der Rohranschlag 13 einstückig und vorzugsweise integral mit den Armen 8 verbunden. Die Befestigungsvorrichtung 4 bzw. die Arme 8 können einen Haltevorsprung 12 oder jeweils mehrere Haltevorsprünge 12 aufweisen, so dass die Haltevorsprünge 12 der Befestigungsvorrichtung 4 in mehrere Wellentäler 5 eingreifen können.

Es ist bevorzugt, dass die Befestigungsvorrichtung 4 gemäß Fig. 2 wenigstens ein Innenelement 17 umfasst. Das wenigstens eine Innenelement ist vorzugsweise auf der Innenseite jedes Arms 8 angeordnet und umfasst bevorzugtermaßen den Haltevorsprung 12 oder die Haltevorsprünge 12. Es ist von Vorteil, dass das Innenelement 17 bzw. die Innenelemente 17 ein Elastomer aufweisen bzw. aus einem Elastomer bestehen. Es ist möglich, dass das Innenelement 17 mit einer Innenseite des zugeordneten Armes 8 verklebt ist. Vorzugsweise sind die Arme 8 so ausgebildet, dass deren freie Enden in einem entspannten Zustand zueinander einen größeren radialen Abstand aufweisen als in einem gespannten Zustand. Es ist sehr bevorzugt, dass der entspannte Zustand der Arme 8 einem geöffneten Zustand der Befestigungsvorrichtung 4 entspricht. Zweckmäßigerweise entspricht ein gespannter Zustand der Arme 8 einem geschlossenen Zustand der Befestigungsvorrichtung 4.

Vorzugsweise umfasst der Leitungsverbinder 2 nach Fig. 2 ein Sicherungselement 10 zum Sichern eines geschlossenen Zustands der Befestigungsvorrichtung. Das Sicherungselement 10 ist vorzugsweise ringförmig ausgebildet. Es ist bevorzugt, dass das Sicherungselement 10 in axialer Richtung relativ zur Befestigungsvorrichtung 4 bzw. zum Verbinderkörper22 verschiebbar angeordnet ist. Vorzugsweise befindet sich das Sicherungselement 10 in einem geöffneten Zustand der Befestigungsvorrichtung 4 in einer Öffnungsposition, wie dies in Fig. 2 gezeigt ist.

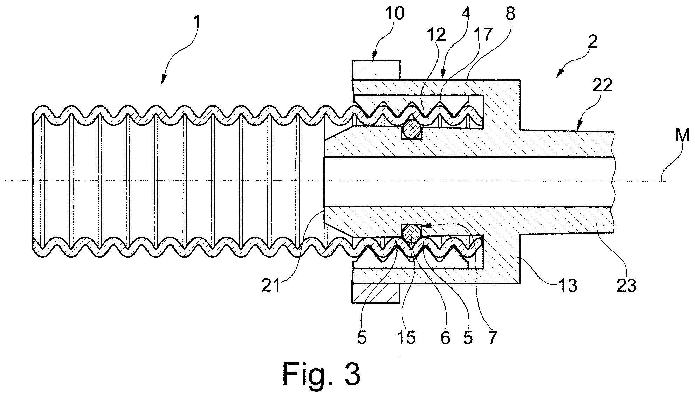

**In** Fig. 3 ist das zweite Ausführungsbeispiel aus Fig. 2 abgebildet, wobei sich die Fluidleitung 1, 2 bzw. die Befestigungsvorrichtung 4 in einem geschlossenen Zustand und das Sicherungselement 10 in einer Schließposition befindet. Es ist sehr bevorzugt, dass das Sicherungselement 10 in einer/der Schließposition weiter axial auswärts angeordnet ist im Vergleich zur Öffnungsposition. Zweckmäßigerweise werden die Schließposition und/oder die Öffnungsposition durch hier nicht abgebildete Rastelemente an dem Verbinderkörper 22 bzw. an der Befestigungsvorrichtung 4 und dem Sicherungselement 10 definiert. Es ist sehr bevorzugt, dass das Sicherungselement 10 und die Befestigungsvorrichtung 4 so ausgebildet sind, dass die Arme 8 aufgrund der Schließposition des Sicherungselements 10 in radialer Richtung aufeinander zu bewegt werden. Zweckmäßigerweise greifen die Haltevorsprünge 12 im geschlossenen Zustand der Befestigungsvorrichtung 4 in die Wellentäler 5 ein und erzeugen einen Formschluss.

Ganz besonders vorzugsweise sind das Sicherungselement 10 in der Schließposition und die Befestigungsvorrichtung 4 in dem geschlossenen Zustand so ausgebildet, dass die Arme 8 eine radial einwärts wirkende Kraft auf das Wellrohr 1 bzw. den Dichtungsring 6 ausüben. Es ist von Vorteil, dass aufgrund der durch das Sicherungselement 10 ausgeübten Kraft auf die Arme 8 ein Kraftschluss zwischen einer Außenseite des Wellrohrs 1 und den Innenelementen 17 bzw. Armen 8 erzeugt wird. Es ist bevorzugt, dass die Schließposition des Sicherungselements 10 den Kraftschluss zwischen dem Dichtungsring 6 und dem Wellrohr 1 im Vergleich zum geöffneten Zustand der Befestigungsvorrichtung 4 bzw. der Fluidleitung 1, 2 vergrößert. Aufgrund des Sicherungselements 10 und/oder der Innenelemente 17 ist das Ausführungsbeispiel gemäß den Figuren 2 und 3 für größere Fluiddrücke geeignet.

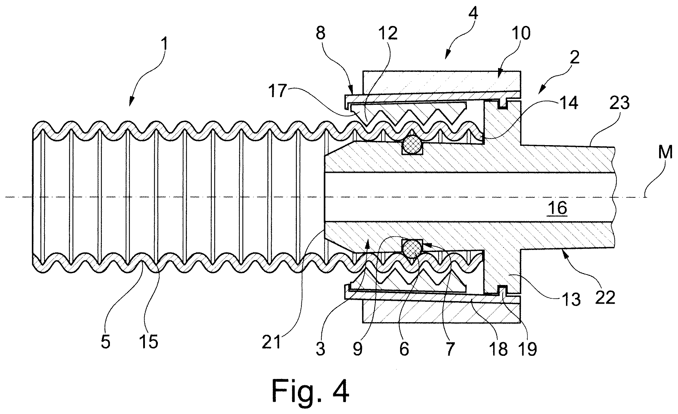

**In** Fig. 4 ist ein drittes Ausführungsbeispiel in einem geschlossenen Zustand der Befestigungsvorrichtung 4 gezeigt. Das Wellrohr 1 des dritten Ausführungsbeispiels ist identisch zu den Wellrohren 1 der ersten beiden Ausführungsbeispiele. Wiederum sind die Unterschiede zu den anderen Ausführungsbeispielen in der Befestigungsvorrichtung 4 zu sehen. Vorzugsweise umfasst der Leitungsverbinder 2 bzw. der Verbinderkörper 22 einen Rohranschlag 13. Der Rohranschlag 13 dieses Ausführungbeispiels ist zweckmäßigerweise einstückig bzw. integral mit dem Verbindungsabschnitt 23 bzw. dem Steckerabschnitt 3 verbunden.

Allerdings ist im Falle des dritten Ausführungsbeispiels der Rohranschlag 13 nicht integral mit den Armen 8 verbunden. Vorzugsweise sind die wenigstens zwei und vorzugsweise wenigstens vier Arme 8 untereinander über eine Armhülse 18 miteinander verbunden. Zweckmäßigerweise sind die Arme 8 und die Armehülse 18 einstückig und vorzugsweise integral miteinander verbunden. Es ist bevorzugt, dass die Armhülse 18 eine Armhülsenbefestigung 19 umfasst. Die Armhülsenbefestigung 19 kann als Rastelement ausgebildet sein, welches mit dem Rohranschlag 13 wechselwirkt und vorzugsweise in den Rohranschlag 13 eingreift.

Bevorzugtermaßen umfasst die Befestigungsvorrichtung 4 des dritten Ausführungsbeispiels Innenelemente 17, wie sie bereits im Falle des zweiten Ausführungsbeispiels beschrieben wurden. Die Arme 8 der Befestigungsvorrichtung 4 des dritten Ausgangsbeispiels sind vorzugsweise so ausgebildet, dass sie in einem geöffneten Zustand zueinander einen größeren radialen Abstand aufweisen im Vergleich zu einem in Fig. 4 gezeigten geschlossenen Zustand.

Das Sicherungselement 10 des dritten Ausführungsbeispiels ist im Vergleich zum Sicherungselement 10 des zweiten Ausgangsbeispiels axial weiter ausgedehnt. Zweckmäßigerweise werden die in Fig. 4 gezeigte Schließposition und/oder die hier nicht dargestellte Öffnungsposition des Sicherungselements 10 über Rastelemente zwischen den Armen 8 bzw. der Armhülse 18 und dem Sicherungselement 10 definiert. Es ist bevorzugt, dass das Sicherungselement 10 in einer/der Öffnungsposition axial weiter einwärts angeordnet ist im Vergleich zu einer/der Schließposition. Besonders vorzugsweise übt das Sicherungselement 10 in der Schließposition eine größere, nach radial innen wirkende Kraft auf die Arme 8 bzw. die Innenelemente 17 bzw. das Wellrohr 1 bzw. den Dichtungsring 6 im Vergleich zur Öffnungsposition aus. Der wesentliche Unterschied zwischen dem dritten und dem zweiten Ausführungsbeispiel besteht folglich in den separat hergestellten Armen 8. Dies ermöglicht einfachere Spritzgusswerkzeuge für den Leitungsverbinder 2. Außerdem lassen sich hierdurch die Innenelemente 17 besser an den Innenseiten der Arme 8 befestigen.

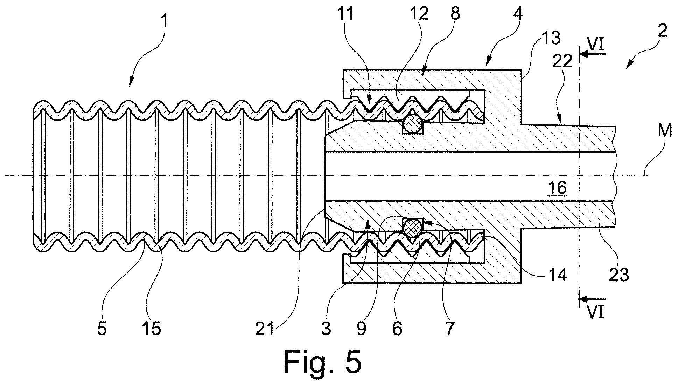

In Fig. 5 ist ein nicht von den Ansprüchen abgedecktes Ausführungsbeispiel einer Fluidleitung 1, 2 abgebildet. Die Fluidleitung 1, 2 umfasst ein Wellrohr 1 sowie einen Leitungsverbinder 2. Das Wellrohr 1 ist identisch zu den Wellrohren 1 der anderen Ausführungsbeispiele ausgestaltet. Der Leitungsverbinder 2 umfasst eine Befestigungsvorrichtung 4 sowie einen Fluidkanal 16. Der Fluidkanal 16 wird durch einen Steckerabschnitt 3 sowie vorzugsweise durch einen Verbindungsabschnitt 23 gebildet. Der Steckerabschnitt 3, der Verbindungsabschnitt 23, der Dichtungsring 6 und die Nut 7 sind identisch zu den anderen Ausführungsbeispielen ausgebildet.

Der Leitungsverbinder 2 umfasst einen Rohranschlag 13, wobei der Rohranschlag vorzugsweise einstückig und weiter vorzugsweise integral mit dem Steckerabschnitt 3 bzw. dem Verbindungsabschnitt 23 verbunden ist. Mit Vorteil umfasst die Befestigungsvorrichtung 4 zwei Arme 8. Die Arme 8 des vierten Ausführungsbeispiels sind zweckmäßigerweise hinsichtlich der Mittenachse M einander diametral gegenüberliegend angeordnet. Vorzugsweise sind die Arme 8 einstückig und weiter vorzugsweise integral mit dem Rohranschlag 13 verbunden.

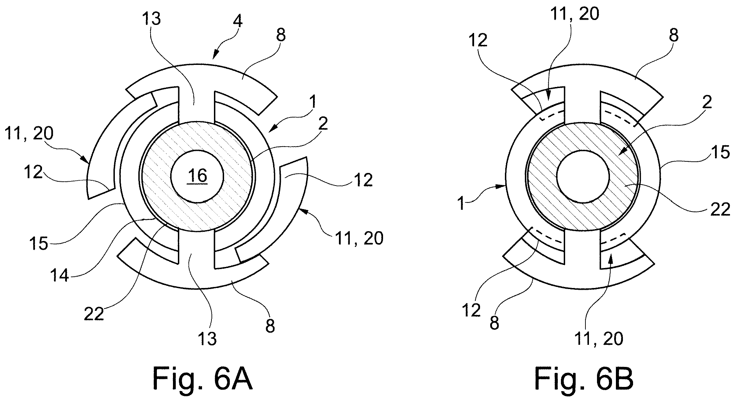

Besonders vorzugsweise umfasst der Leitungsverbinder 2 einen Schließer 11, welcher auf der Innenseite der Arme 8 angeordnet ist. Der Schließer 11 ist bevorzugtermaßen in Umfangsrichtung drehbar zu den Armen 8 ausgebildet, wie dies aus den Querschnitten der Figuren 6A und 6B deutlich wird. Fig. 6A zeigt eine Öffnungsposition des Schließers 11, während Fig. 6B eine Schließposition des Schließers 11 abbildet. Der Schließer 11 umfasst vorzugsweise zwei Schließerarme 20, welche hinsichtlich der Mittenachse M einander diametral gegenüberliegen. Die Schließerarme 20 sind über eine hier nicht abgebildete Schließerhülse in Umfangsrichtung miteinander verbunden. Zweckmäßigerweise ist die Schließerhülse axial weiter einwärts befindlich im Vergleich zu den Schließerarmen 20.

Die Schließerarme 20 sind in radialer Richtung vorzugsweise federelastisch ausgebildet. Die Arme 8 sind bevorzugtermaßen starr ausgebildet. Es ist sehr bevorzugt, dass der Schließer 11 aufgrund der Drehbewegung durch die Arme 8 in radialer Richtung gestaucht wird bzw. die Schließerarme 20 radial aufeinander zu bewegt werden, so dass die Schließerarme 20 in Eingriff mit wenigstens einem Wellental 5 bzw. zwei Wellenbergen 15 gelangen. Hierdurch kämmen die Schließerarme 20 bzw. deren Haltevorsprünge 12 mit den Wellenbergen, wie dies in den Figuren 5 und 6B zu erkennen ist.

Vorzugsweise ist ein Überlapp in Umfangsrichtung zwischen einem Schließerarm 20 und einem Arm 8 in der Öffnungsposition geringer im Vergleich zur Schließposition. Es bevorzugt, dass sich die Schließerarme 20 in Umfangsrichtung (im Uhrzeigersinn oder gegen den Uhrzeigersinn) in einem Querschnitt verjüngen. Vorzugsweise verjüngen sich die Arme 8 in Umfangsrichtung im Querschnitt (gegen den Uhrzeigersinn bzw. im Uhrzeigersinn). Es ist sehr bevorzugt, dass der Schließer 11 in der Schließposition eine nach radial innen wirkende Kraft auf das Wellrohr 1 bzw. den Dichtring 6 ausübt. Vorzugsweise liegt im Falle der Öffnungsposition (Fig. 6A) des Schließers weder ein Kraftschluss noch ein Formschluss mit dem Wellrohr 1 vor.

In hier nicht dargestellten Ausführungsformen können das Sicherungselement 10 oder der Schließer 11 Anzeigeelemente 10, 11 zur Anzeige einer Öffnungs- oder Schließposition sein. Es ist möglich, dass das Anzeigeelement 10, 11 einen hier nicht dargestellten Anzeigemarker in Form eines, beispielsweise, QR-Codes auf dem Verbinderkörper 22 in der Öffnungsposition verdeckt. In der jeweiligen Schießposition wird der Anzeigemarker vom Anzeigeelement 10, 11 freigegeben, so dass ein Scanner den Zustand des Anzeigeelements 10, 11 anhand des Anzeigemarkers auslesen kann.

### Bezugszeichenliste:

| | | | | |
|---|---|---|---|---|
| 1 | Wellrohr | 14 | Stirnende | |
| 2 | Leitungsverbinder | 15 | Wellenberg | |
| 3 | Steckerabschnitt | 16 | Fluidkanal | |
| 4 | Befestigungsvorrichtung | 17 | Innenelement | |
| 5 | Wellental | 18 | Armhülse | |
| 6 | Dichtungsvorsprung | 19 | Armhülsenbefestigung | |
| 7 | Nut | 20 | Schließerarm | |
| 8 | Arm | 21 | Stirnwand | |
| 9 | Nutgrund | 22 | Verbinderkörper | |
| 10 | Sicherungselement | 23 | Verbindungsabschnitt | |
| 11 | Schließer | M | Mittenachse | |
| 12 | Haltevorsprung | 10,11 | | Anzeigeelement |
| 13 | Rohranschlag | 1, 2 | | Fluidleitung |

## Patentansprüche

1. Fluidleitung (1, 2) umfassend ein Wellrohr (1) und wenigstens einen Leitungsverbinder (2), wobei der Leitungsverbinder (2) einen Verbinderkörper (22) umfasst, wobei der Verbinderkörper (22) einen Steckerabschnitt (3) aufweist, wobei das Wellrohr (1) auf den Steckerabschnitt (3) aufgesteckt ist, wobei der Leitungsverbinder (2) eine Befestigungsvorrichtung (4) umfasst, wobei die Befestigungsvorrichtung (4) das Wellrohr (1) an dem Steckerabschnitt (3) bzw. Verbinderkörper (22) befestigt, wobei der Steckerabschnitt (3) eine Mittenachse (M) aufweist und die Mittenachse (M) eine axiale Richtung definiert,
wobei der Leitungsverbinder (2) wenigstens einen Dichtungsring (6) umfasst, wobei der Dichtungsring (6) ein Elastomer aufweist,
wobei die Befestigungsvorrichtung (4) wenigstens zwei Arme (8, 20) umfasst, wobei ein axial auswärtiges Ende der Arme (8, 20) frei ist, so dass das axial auswärtige Ende der Arme (8, 20) in radialer Richtung federelastisch beweglich ist,
**dadurch gekennzeichnet,dass** der Steckerabschnitt (3) wenigstens eine Nut (7) umfasst und der Dichtungsring (6) in der Nut (7) angeordnet ist.

2. Fluidleitung (1, 2) nach Anspruch 1, wobei der auf den Steckerabschnitt (3) aufgesteckte Abschnitt des Wellrohrs (1) wenigstens abschnittsweise und vorzugsweise vollständig gewellt ausgebildet ist.

3. Fluidleitung (1, 2) nach einem der Ansprüche 1 oder 2, wobei die Befestigungsvorrichtung (4) in axialer Richtung wenigstens einen Formschluss mit dem Wellrohr (1) eingegangen ist oder eingehen kann.

4. Fluidleitung (1, 2) nach einem der Ansprüche 1 bis 3, wobei die Befestigungsvorrichtung (4) bzw. der Leitungsverbinder (2) eine Klemmkraft auf das Wellrohr (1) bzw. den Dichtungsring (6) in radialer Richtung ausübt.

5. Fluidleitung (1, 2) nach einem der Ansprüche 1 bis 4, wobei die Fluidleitung (1, 2) bzw. die Befestigungsvorrichtung (4) bzw. das Wellrohr (1) wenigstens ein Innenelement (17) aufweist, wobei das Innenelement (17) bevorzugtermaßen ein Elastomer umfasst bzw. gummielastisch ausgebildet ist, wobei das Innenelement (17) vorzugsweise in radialer Richtung zwischen der Befestigungsvorrichtung (4) bzw. einem Arm (8) und dem Wellrohr (1) angeordnet ist.

6. Fluidleitung (1, 2) nach einem der Ansprüche 1 bis 5, wobei der Leitungsverbinder (2) einen Rohranschlag (13) zum Anschlagen in axialer Richtung eines Stirnendes (14) des Wellrohrs (1) umfasst.

7. Fluidleitung (1, 2) nach einem der Ansprüche 1 bis 6, wobei der Steckerabschnitt (3) wenigstens abschnittsweise eine zylindrische Oberfläche bzw. Außenseite aufweist.

8. Fluidleitung (1, 2) nach einem der Ansprüche 1 bis 7, wobei der Leitungsverbinder (2) bzw. die Befestigungsvorrichtung (4) einen für das Einführen des Wellrohrs (1) geöffneten Zustand und einen für das Fixieren des Wellrohrs (1) geschlossenen Zustand definiert.

9. Fluidleitung (1, 2) nach einem der Ansprüche 1 bis 8, wobei der Leitungsverbinder (2) ein Sicherungselement (10) zum Sichern eines geschlossenen Zustands der Befestigungsvorrichtung (4) umfasst, wobei bevorzugt ist, dass das Sicherungselement (10) zum Sichern des geschlossenen Zustands der Befestigungsvorrichtung (4) auf die Befestigungsvorrichtung (4), vorzugsweise in axialer und insbesondere axial auswärtiger Richtung, aufschiebbar ist.

10. Fluidleitung (1, 2) nach einem der Ansprüche 1 bis 9, wobei wenigstens ein Teil (8, 19) der Befestigungsvorrichtung (4) separat vom Verbinderkörper (22) hergestellt worden ist, wobei der separat hergestellte Teil (8, 19) der Befestigungsvorrichtung (4) mit dem Verbinderkörper (22) verbunden ist.

11. Fluidleitung (1, 2) nach einem der Ansprüche 1 bis 10, wobei die Befestigungsvorrichtung (4) so ausgebildet ist, dass das Wellrohr (1) beim Aufschieben auf den Steckerabschnitt (3) mit der Befestigungsvorrichtung (4) verrastet.

12. Fluidleitung (1, 2) nach einem der Ansprüche 1 bis 11, wobei der Leitungsverbinder (2) eine Anzeigevorrichtung, insbesondere ein Anzeigeelement (10, 11) und/oder einen Anzeigemarker, zur Anzeige eines/des geschlossenen Zustands der Befestigungsvorrichtung (4) aufweist.

13. Verwendung der Fluidleitung (1, 2) nach einem der Ansprüche 1 bis 12 in einem Fahrzeug, vorzugsweise in einem Landfahrzeug, weiter vorzugsweise in einem Straßenfahrzeug, wobei bevorzugt ist, dass das Fahrzeug ein Elektrofahrzeug ist und eine Batterie zum Antrieb eines Elektromotors aufweist, wobei die Fluidleitung bevorzugtermaßen Bestandteil eines Kühlmittelkreises zum Kühlen der Batterie ist.

## Claims

1. Fluid line (1, 2) comprising a corrugated pipe (1) and at least one line connector (2), the line connector (2) comprising a connector body (22), the connector body (22) having a plug portion (3), the corrugated pipe (1) being plugged onto the plug portion (3), the line connector (2) comprising a fastening device (4), the fastening device (4) fastening the corrugated pipe (1) to the plug portion (3) or connector body (22), the plug portion (3) having a center axis (M) and the center axis (M) defining an axial direction,
the line connector (2) comprising at least one sealing ring (6), the sealing ring (6) having an elastomer, the fastening device (4) comprising at least two arms (8, 20), an axially outward end of the arms (8, 20) being free so that the axially outward end of the arms (8, 20) is resiliently movable in the radial direction, **characterized in that** the plug portion (3) comprises at least one groove (7) and the sealing ring (6) is arranged in the groove (7).

2. Fluid line (1, 2) according to claim 1, wherein the portion of the corrugated pipe (1) plugged onto the plug portion (3) is at least partially, and preferably completely, corrugated.

3. Fluid line (1, 2) according to either of claims 1 or 2, wherein the fastening device (4) has entered into or can enter into at least one interlocking connection with the corrugated pipe (1) in the axial direction.

4. Fluid line (1, 2) according to any of claims 1 to 3, wherein the fastening device (4) or the line connector (2) exerts a clamping force on the corrugated pipe (1) or the sealing ring (6) in the radial direction.

5. Fluid line (1, 2) according to any of claims 1 to 4, wherein the fluid line (1, 2) or the fastening device (4) or the corrugated pipe (1) has at least one inner element (17), wherein the inner element (17) preferably comprises an elastomer or is designed to be rubber-elastic, wherein the inner element (17) is preferably arranged in the radial direction between the fastening device (4) or an arm (8) and the corrugated pipe (1).

6. Fluid line (1, 2) according to any of claims 1 to 5, wherein the line connector (2) comprises a pipe stop (13) for stopping a front end (14) of the corrugated pipe (1) in the axial direction.

7. Fluid line (1, 2) according to any of claims 1 to 6, wherein the plug portion (3) at least partially has a cylindrical surface or outer side.

8. Fluid line (1, 2) according to any of claims 1 to 7, wherein the line connector (2) or the fastening device (4) defines an open state for inserting the corrugated pipe (1) and a closed state for fixing the corrugated pipe (1) in place.

9. Fluid line (1, 2) according to any of claims 1 to 8, wherein the line connector (2) comprises a securing element (10) for securing a closed state of the fastening device (4), wherein it is preferred that the securing element (10) for securing the closed state of the fastening device (4) can be pushed onto the fastening device (4), preferably in an axial direction, and in particular in an axially outward direction.

10. Fluid line (1, 2) according to any of claims 1 to 9, wherein at least one part (8, 19) of the fastening device (4) has been produced separately from the connector body (22), wherein the separately produced part (8, 19) of the fastening device (4) is connected to the connector body (22).

11. Fluid line (1, 2) according to any of claims 1 to 10, wherein the fastening device (4) is designed such that the corrugated pipe (1) latches into the fastening device (4) when pushed onto the plug portion (3).

12. Fluid line (1, 2) according to any of claims 1 to 11, wherein the line connector (2) has an indicator device, in particular an indicator element (10, 11) and/or an indicator marker, for indicating a/the closed state of the fastening device (4).

13. Use of the fluid line (1, 2) according to any of claims 1 to 12 in a vehicle, preferably in a land vehicle, more preferably in a road vehicle, wherein it is preferred that the vehicle is an electric vehicle and has a battery for driving an electric motor, wherein the fluid line is preferably a component of a coolant circuit for cooling the battery.

## Revendications

1. Conduite de fluide (1, 2) comprenant un tube ondulé (1) et au moins un raccord de conduite (2), dans laquelle le raccord de conduite (2) comprend un corps de raccord (22), dans laquelle le corps de raccord (22) présente une section de fiche (3), dans laquelle le tube ondulé (1) est enfiché sur la section de fiche (3), dans laquelle le raccord de conduite (2) comprend un dispositif de fixation (4), dans laquelle le dispositif de fixation (4) fixe le tube ondulé (1) à la section de fiche (3) ou au corps de raccord (22), respectivement, dans laquelle la section de raccord (3) présente un axe central (M) et l'axe central (M) définit une direction axiale,
dans laquelle le raccord de conduite (2) comprend au moins une bague d'étanchéité (6), dans laquelle la bague d'étanchéité (6) présente un élastomère, dans laquelle le dispositif de fixation (4) comprend au moins deux bras (8, 20), dans laquelle une extrémité axialement extérieure des bras (8, 20) est libre, de sorte que l'extrémité axialement extérieure des bras (8, 20) est mobile à la manière d'un ressort élastique dans la direction radiale, **caractérisée en ce que** la section de fiche (3) comprend au moins une rainure (7) et la bague d'étanchéité (6) est agencée dans la rainure (7).

2. Conduite de fluide (1, 2) selon la revendication 1, dans laquelle la section du tube ondulé (1) enfichée sur la section de fiche (3) est réalisée ondulée au moins par sections et de préférence complètement.

3. Conduite de fluide (1, 2) selon l'une des revendications 1 ou 2, dans laquelle le dispositif de fixation (4) est ou peut être engagé dans au moins une liaison par complémentarité de formes avec le tube ondulé (1) dans la direction axiale.

4. Conduite de fluide (1, 2) selon l'une des revendications 1 à 3, dans laquelle le dispositif de fixation (4) ou le raccord de conduite (2) exerce une force de serrage sur le tube ondulé (1) ou la bague d'étanchéité (6) dans la direction radiale.

5. Conduite de fluide (1, 2) selon l'une des revendications 1 à 4, dans laquelle la conduite de fluide (1, 2) ou le dispositif de fixation (4) ou le tube ondulé (1) présente au moins un élément intérieur (17), dans laquelle l'élément intérieur (17) comprend de préférence un élastomère ou est réalisé de manière à avoir l'élasticité du caoutchouc, dans laquelle l'élément intérieur (17) est agencé de préférence dans la direction radiale entre le dispositif de fixation (4) ou un bras (8) et le tube ondulé (1).

6. Conduite de fluide (1, 2) selon l'une des revendications 1 à 5, dans laquelle le raccord de conduite (2) comprend une butée de tube (13) destinée à la butée dans la direction axiale d'une extrémité frontale (14) du tube ondulé (1).

7. Conduite de fluide (1, 2) selon l'une des revendications 1 à 6, dans laquelle la section de fiche (3) présente au moins par sections une surface ou un côté extérieur cylindrique.

8. Conduite de fluide (1, 2) selon l'une des revendications 1 à 7, dans laquelle le raccord de conduite (2) ou le dispositif de fixation (4) définit un état ouvert pour l'introduction du tube ondulé (1) et un état fermé pour la fixation du tube ondulé (1).

9. Conduite de fluide (1, 2) selon l'une des revendications 1 à 8, dans laquelle le raccord de conduite (2) comprend un élément de sécurité (10) pour assurer un état fermé du dispositif de fixation (4), dans laquelle il est préférable que l'élément de sécurité (10), pour assurer l'état fermé du dispositif de fixation (4), puisse être enfilé sur le dispositif de fixation (4), de préférence dans une direction axiale et en particulier axialement vers l'extérieur.

10. Conduite de fluide (1, 2) selon l'une des revendications 1 à 9, dans laquelle au moins une partie (8, 19) du dispositif de fixation (4) a été fabriquée séparément du corps de raccord (22), dans laquelle la partie (8, 19) du dispositif de fixation (4) fabriquée séparément est reliée au corps de raccord (22).

11. Conduite de fluide (1, 2) selon l'une des revendications 1 à 10, dans laquelle le dispositif de fixation (4) est réalisé de manière à ce que le tube ondulé (1) s'enclenche avec le dispositif de fixation (4) lorsqu'il est enfilé sur la section de fiche (3).

12. Conduite de fluide (1, 2) selon l'une des revendications 1 à 11, dans laquelle le raccord de conduite (2) présente un dispositif d'affichage, en particulier un élément d'affichage (10, 11) et/ou un marqueur d'affichage, pour afficher un/l'état fermé du dispositif de fixation (4).

13. Utilisation de la conduite de fluide (1, 2) selon l'une des revendications 1 à 12 dans un véhicule, de préférence dans un véhicule terrestre, de préférence encore dans un véhicule routier, dans laquelle il est préférable que le véhicule soit un véhicule électrique et présente une batterie pour l'entraînement d'un moteur électrique, dans laquelle la conduite de fluide fait de préférence partie d'un circuit de fluide de refroidissement pour refroidir la batterie.
